Europäisches Patentamt

European Patent Office

Office européen des brevets

(11) Publication number: **0 131 712**
**A2**

# EUROPEAN PATENT APPLICATION

(21) Application number: **84105589.0**

(22) Date of filing: **16.05.84**

(51) Int. Cl.⁴: **F 16 H 5/00**

(30) Priority: **24.05.83 JP 78020/83 U**

(43) Date of publication of application:
**23.01.85 Bulletin 85/4**

(84) Designated Contracting States:
**DE FR GB**

(71) Applicant: **NISSAN MOTOR COMPANY, LIMITED**
**No.2, Takara-cho, Kanagawa-ku**
**Yokohama-shi Kanagawa-ken 221(JP)**

(72) Inventor: **Shibayama, Takashi**
**No. 15-12-206, Matsugae-cho**
**Sagamihara City(JP)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) **Mechanical shift shock attenuating arrangement for automotive planetary gear transmission or the like.**

(57) In order to absorb shift shock, one of the ring gear, sun gear and pinion gear carrier of a planetary gear set is geared to a rotatable mass which effectively increases the inertia thereof. The increased inertia reduces the rate at which the element accelerates or decelerates upon actuation of a hydraulically operated friction element or elements and attenuates shift shock.

FIG.2

EP 0 131 712 A2

# MECHANICAL SHIFT SHOCK ATTENUATING ARRANGEMENT FOR AUTOMOTIVE PLANETARY GEAR TRANSMISSION OR THE LIKE

## BACKGROUND OF THE PRESENT INVENTION

### Field of the Invention

The present invention relates generally to a change speed transmission and more specifically to a transmission including a planetary gear train featuring a fly-wheel like rotatable mass which attenuates shift shock.

### Background of the present invention

Various attempts have been made to control the rate at which the hydraulic pressure which actuates the servos via which friction elements such as band brakes and clutches of hydraulically controlled planetary gear transmssions, is permitted to increase, in order to reduce so called "shift shock" generated when the transmission changes from one gear (speed ratio) to another. However, these arrangements have met with only limited success as they require a number of valves and/or accumulators for controlling the pressure and due to the change in operational characteristics of the clutches and brakes with wear, oil temperature and like influences, gradually lose their ability to adequately suppress shift shock.

On example of the above is found in United States Patent No. 4, 274, 308 issued on June 23, 1981 in the name of Iwanaga et al. In this arrangement a single accumulator is provided with three discrete chambers which each communicate with a different hydraulic servo unit. However, as the pressure controlling characteristics of this device cannot be changed to take into account the wear of the friction units which induce the respective gear changes, the ability to reduce shift shock undesirably changes with the passing of time.

SUMMARY OF THE INVENTION

It is an object of the present invention to provide a non-hydraulic shift shock attentuating arrangement for a planetary gear transmission which reduces the rate at which an element thereof is accelerated and decelerated upon shifting from one gear ratio to another and which therefore enables the simplification of the hydraulic control valve arrangement.

In brief, this object is fullfilled by providing a planetary gear unit wherein one of the ring gear, sun gear and pinion gear carrier (at least) is geared to a rotatable mass in a manner that the inertia thereof is effectively increased and the rate at which the particular element accelerates or decelerates upon actuation of a hydraulically operated friction element or elements is decreased.

More specifically, the present invention takes the form of a transmission featuring a planetary gear train, a control arrangement for causing the gear train to produce a plurality of speed change ratios, and a rotatable mass operatively connected with an element of said planetary gear train for increasing the inertia thereof and for reducing the rate of acceleration and deceleration of same upon the control arrangement inducing the plantary gear train to change from one speed ratio to another, which change induces a change in angular acceleration of the element.

BRIEF DESCRIPTION OF THE DRAWINGS

The features and advantages of the arrangement of the present invention will become more clearly appreciated from the following description taken in conjunction with the accompanying drawings in which:

Fig. 1 is a sectional view of a planetary type speed change transmission incorporating an embodiment of the present invention; and

Fig. 2 is a schematic illustration of the transmission arrangement shown in Fig. 1.

DETAILED DESCRIPTION OF THE PREFERREDEMBODIMENTS

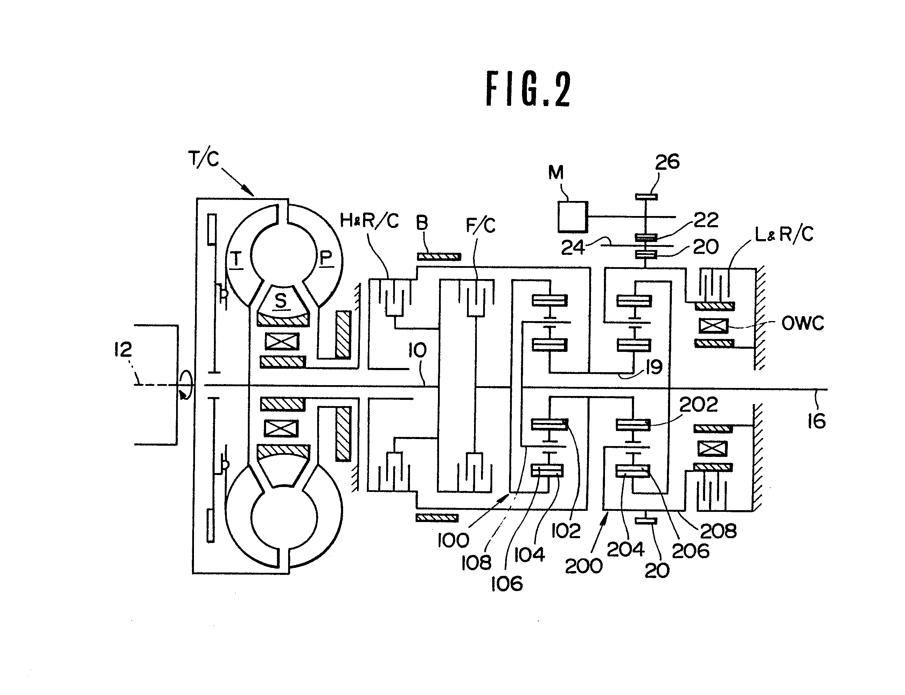

Turning now to the drawings, and more specifically to Fig. 2, there is shown in schematic form, a three forward and one reverse speed transmission gear train to which an embodiment of the present invention is applied. This arrangement, as shown, includes an input shaft 10 which is operatively connected with an output shaft 12 of an engine via a torque converter T/C, an output shaft 16 which is operatively connected with a final drive unit (not shown), a first planeary gear set 100, a second planetary gear set 200, a high and reverse clutch H&R/C, a forward clutch F/C, an intermediate band brake B, a low and reverse clutch L&R/C and a one-way clutch OWC.

The first planetary gear set 100 includes a sun gear 102, a ring gear 104 and pinion gears 106 carried on a pinion carrier 108. The second set 200 includes a sun gear 202, a ring gear 204 and interconnecting pinion gears 206 carried on a carrier 208. As shown, the carrier 108 of the first planetary gear set 100 is connected with the output shaft 16 while the sun gear 102 and the ring gear 104 thereof are selectively connectable with the input shaft 10 via the high and reverse clutch H&R/C and the forward clutch F/C, respectively. The ring gear 204 of the second planetary gear set 200 is connected to the output shaft 16 while the pinion carrier 208 is connected with the transmission casing 18 through the one-way clutch OWC and selectively connectable therewith via the low and reverse clutch L&R/C. The sun gears 102 and 202 are interconnected by intermediate shaft 19 and selectively connectable with the transmission casing 18 through the intermediate band brake B.

In this arrangement the band brake B is controlled by a hydraulic servo mechanism (not shown) including a servo apply chamber S/A and a servo-release chamber S/B. The effective area of the servo apply chamber S/A is less than that of the servo release chamber S/B so that introduction of hydraulic fluid into the apply chamber S/A applys the band brake B while the introduction of the same pressure in the release chamber S/R releases the brake irrespective of the presence of the same pressure in the apply chamber.

The torque converter T/C includes a pump impeller P, a turbine runner T and a stator S. The pump impeller P is connected with the engine output shaft 12 through the torque converter cover while the turbine runner T is connected to the input shaft 10 and the stator to the transmission casing through a one-way clutch SOWC.

Selective application of the high and reverse clutch H&R/C, forward clutch F/C, brand brake B and low and reverse clutch L&R/C enables the production of three forward speed and one reverse speed as shown in the table below. In this table the symbol "O" denotes engagement. It will be also noted that in the event that in first speed in the case that the low and reverse brake is not applied an engine braking function is not provided.

|  | H&R/C | F/C | L&R/C (OWC) | B S/A | B S/R |
|---|---|---|---|---|---|
| 1st speed |  | o | o |  |  |
| 2nd speed |  | o |  | o | o |
| 3rd speed | o | o |  | o | o |
| Reverse | o |  | o |  |  |

An arrangement similar to the above is disclosed in detail in European Patent Application Provisional Publication No. 0 059 425 published in Sept. 8, 1982 the disclosure of which is incorporated herein by reference thereto.

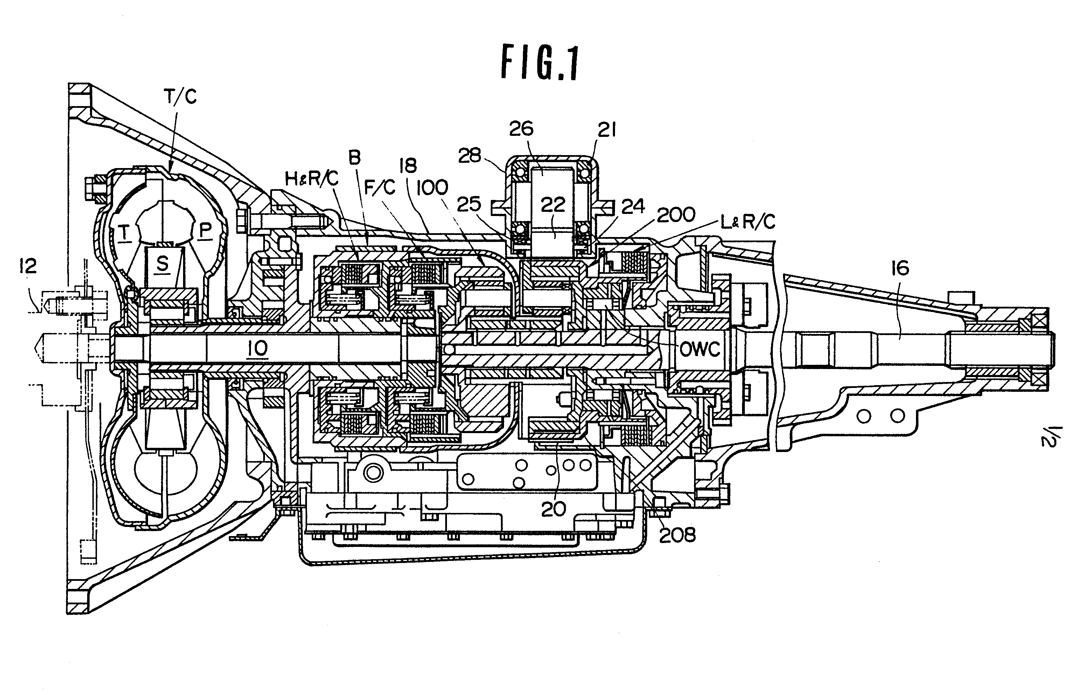

In the illustrated embodiment a drive gear 20 is provided on the external periphery of the pinion carrier 208 of the second planetary gear set 200. An idler gear 22 is mounted on a shaft 24 journalled in bearings 25 (see Fig. 1) and arranged to mesh with the drive gear 20. Rotatably mounted via roller bearings 21 adjacent to and in drive connection with the idler gear 22 is a "counter" gear 26. This gear 26, as shown in Fig. 1, is arranged to have a given mass (M). In Fig. 2, the mass (M) is shown (schematically) separated from the counter gear 26. Of course either arrangement is possible, however the arrangement shown in Fig. 1 is preferred from the point of compactness. The counter and idler gears 26, 22 are enclosed in a sub-housing 28 forming part of the main transmission housing 18. It will be noted that due to the difference in diameters of the drive gear 20 and the idler gear 22, one revolution of the carrier will produce more than one rotation of the counter gear 26.

When the above disclosed transmission is conditioned to produce first gear, the input shaft 10 is engaged with the ring gear 104 through the forward clutch F/C the intermediate shaft 19 thereby rotating the sun gear 102 in a direction opposite to that in which the input shaft is rotating. Accordingly, as the sun gear 202 of the second planetary gear set 200 rotates together with the sun gear 102 of the first planetary gear set 100, the pinion gears 106 and carrier 108 are induced to rotate. In first speed, rotation of the carrier 208 of the of the second planetary gear set 200 in the direction opposite that of the input shaft 10, is prevented by the one way clutch OWC. Thus ring gear 204 rotates in the same direction as the input shaft 10 driving the output shaft 16.

Upon a 1-2 up-shift occuring, the transmission is conditioned so that band brake B engages, rendering the sun gears 102, 202 stationary with respect to the transmission housing 18. Accordingly, the rotation of the input shaft 10 is transmitted to the ring gear 104 of the first planetary gear set 100 inducing the pinion gears 106 to rotate about the sun gear 102. This induces rotation of the pinion carrier 108 and accordingly the output shaft 16.

Under these conditions, as the sun gears 102 and 202 are both held stationary by the engagement of the band brake B, the ring gear 204 rotates in synchronism with the output shaft 16 inducing the pinion gears 206 to rotate about their associated sun gear 202 and cause the drive gear 20 to induce the counter gear 26 to rotate. As the counter gear has a notable mass, a reaction is applied to the pinion carrier which increases the effective inertia thereof whereby the rate at which it is accelerated during the 1-2 shift is slowed and the energy which would otherwise produce a shift shock be converted into kinetic energy (viz., rotation of the counter gear 26).

This arrangement is deemed advantageous in that it is compact and as the interia of a rotating body is approximately proportional to the square of the rotational speed, the previously mentioned "step-up" gearing arrangement between the drive and counter gears 20, 26 enables good shock attenuation without any excessive weight penalties.

Upon a 3-2 downshift, the transmission changes from a condition wherein the forward clutch F/C and the high and reverse clutch H&R/C are engaged and the low and reverse clutch L&R/C is released to one wherein the forward clutch F/C and the brand brake B are applied. Thus, the transmission changes from a situation wherein the input and output shafts 10 and 16 are directly connected for synchronous rotation, wherein the carrier 208 of the second planetary gear set rotates together with the output shaft 16 and at the same rotational speed and wherein the counter gear 26 is being rotated via the mechanical connection provided therebetween the the drive and idler gears 20, 22; to a situation wherein, upon the 3-2 downshift being implemented, the application of the band brake B connects the sun gears 102 and 202 with the stationary transmission housing and the input shaft 10 rotates as a speed higher than that of the ouput shaft 16. Under these conditions as the sun gear 202 is rendered stationary, the rotational speed of the carrier 208 is reduced. However, at this time the kinetic energy stored in the rotating counter gear 26 dissipates through the carrier 208 causing same to decelerate at a rate slower than in prior art transmissions, reducing the shift shock which would otherwise accompany an abrupt hault of the carrier 208.

Of course the present invention is not limited to the use of a single mass and further rotatable masses maybe similarly geared to other elements of the transmission which require the provision of the same acceleration/deceleration feature for the purposes of attenuating shift shock and the like.

WHAT IS CLAIMED IS:

1.   In a transmission

a planetary gear train;

a control arrangement for causing said gear train to produce a plurality of speed change ratios; and

a rotatable mass operatively connected with an element of said planetary gear train for increasing the inertia of said element and for reducing the rate of acceleration and deceleration thereof upon said control arrangement inducing said plantary gear train to change from one speed ratio to another, which change induces a change in angular acceleration of said element.

2.   In a change speed transmission having an input shaft and an output shaft

(a) a planetary gear set comprising:

an input element operatively connectable with said input shaft;

an output element operatively connected with said output shaft;

a control element operatively connected with said input and output elements;

(b) a control arrangement for selectively rendering said control element one of:

(i) stationary with respect to a housing in which said planetary gear set is disposed, and

(ii) rotatable with respect to said housing and subject to the rotation of said input and output elements; and

(c) a rotatable mass operatively connected with one of said input, output and control elements for increasing the inertia thereof.

3.    A transmission as claimed in claim 2, wherein said input element takes the form of a sun gear, said output element takes the form of a ring gear and said control element takes the form of a carrier which supports pinion gears which mesh with said sun and ring gears, and wherein
    said rotatable mass is operatively connected with said carrier by a drive gear synchronously rotatable with said carrier, an idler gear which meshes with said drive gear and a counter gear which meshes with said idler gear.

4.    A transmission as claimed in claim 3, wherein said rotatable mass is integral with said counter gear.

5.    A transmission as claimed in claim 3, wherein the diameter of said drive gear is greater than that of said idler gear and said counter gear so that one revolution of said drive gear produces more than one revolution of said counter gear.

6.    A transmission as claimed in claim 2, further comprising:
    a second planetary gear set including an input element, an output element and a control element, said second planetary gear set being operatively interposed between said input shaft and said first planetary gear set, said second planetary gear set being operatively connected with said control arrangement so that said control element can be rendered one of stationary and rotatable with respect to said housing, said first and second planetary gear sets being arranged to produce a plurality of forward speeds and one reverse speed upon selective operation of said control arrangment.

# FIG.1

T/C

H&R/C  B  18  26  21  28

F/C  100  22

25  24  200  L&R/C

T  P

S

12

10  OWC  16

20  208

1/2

0131712

# FIG.2